# FASCICULE DE BREVET EUROPEEN

(11) **EP 3 083 813 B1**
(45) Date de publication et mention de la délivrance du brevet: **07.11.2018**
(21) Numéro de dépôt: 14827207.3
(22) Date de dépôt: 19.12.2014
(51) Int. Cl.: C08L 9/06, C08L 21/00, C08L 71/12

(54) **COMPOSITION DE CAOUTCHOUC COMPRENANT UNE RESINE DE POLYPHENYLENE ETHER COMME PLASTIFIANT**
KAUTSCHUKZUSAMMENSETZUNG ENTHALTEND EIN POLYPHENYLEN-ETHER-HARZ ALS WEICHMACHER
LATEX COMPOSITION COMPRISING A POLYPHENYLENE ETHER RESIN AS PLASTISIZER

(30) Priorité: 20.12.2013 FR 1363154
(43) Date de publication de la demande: 26.10.2016
(73) Titulaire: Compagnie Générale des Etablissements Michelin, 63000 Clermont-Ferrand (FR)
(72) Inventeur: ABAD, Vincent, F-63040 Clermont-Ferrand Cedex 9 (FR)
(74) Mandataire: Sidhu, Alban
(86) Numéro de dépôt international: PCT/EP2014/078680
(87) Numéro de publication internationale: WO 2015/091921

(56) Documents cités:
- WO-A1-2011/161222

## Description

La présente invention est relative aux compositions de caoutchouc destinées notamment à la fabrication de pneumatiques ou de produits semi-finis pour pneumatiques, en particulier des compositions de caoutchouc pour bandes de roulement de pneumatique présentant une grande facilité de fabrication des mélanges et une bonne résistance à l'usure en pneumatique.

Les pneumatiques sont soumis à de nombreuses sollicitations lors de leur usage. Les bandes de roulement de pneumatique notamment, doivent obéir à un grand nombre d'exigences techniques, souvent antinomiques, parmi lesquelles une résistance élevée à l'usure, une bonne adhérence, sur route sèche comme sur route mouillée. Les mélanges pour ces pneumatiques doivent aussi présenter une bonne processabilité, c'est-à-dire qu'ils doivent être faciles à fabriquer.

Il est connu d'utiliser dans les compositions de pneumatique des élastomères, combinés à des charges renforçantes, et à des agents plastifiants. Classiquement, ces agents plastifiants peuvent être des huiles plastifiantes ou des résines plastifiantes, telles que décrites dans de nombreux documents, par exemple dans les demandes de brevet FR 2866028, FR 2877348 ou FR 2889538, décrivant notamment l'utilisation de résines thermoplastiques comme résines plastifiantes.

Par ailleurs, un document japonais JP 2004-238547 décrit une composition comprenant des particules de taille micrométrique (10 µm ou 45 µm environ) d'une résine de polyphénylène éther, qui permettent d'augmenter la rigidité des compositions, avec une augmentation jugée acceptable de l'hystérèse des compositions. Dans ce document, la résine de polyphénylène éther est utilisée sous forme de particules micrométriques (10 µm ou 45 µm environ), et non sous la forme d'un plastifiant compatible, dispersé et intimement mélangé à la matrice élastomérique de la composition.

A présent, les Demanderesses ont découvert lors de leurs recherches qu'une résine thermoplastique à base de motifs polyphénylène éther éventuellement substitués peut avantageusement être utilisée comme résine plastifiante dans une composition dans laquelle l'élastomère majoritaire est un élastomère diénique vinylaromatique. L'utilisation d'une résine plastifiante permet de façon surprenante d'améliorer le compromis de performance entre la facilité de fabrication des mélanges et l'adhérence des pneumatiques. De plus, l'utilisation de ces résines thermoplastiques à base de motifs polyphénylène éther éventuellement substitués permet de diminuer la quantité de résine par rapport aux résines thermoplastiques plastifiantes classiques, ce qui permet d'avoir une diminution du collant à cru des compositions lié à l'utilisation de ces résines et donc de faciliter la fabrication des pneumatiques comprenant ces compositions.

En conséquence, un premier objet de l'invention concerne une composition de caoutchouc à base d'au moins un élastomère diénique vinylaromatique à un taux compris dans un domaine allant de 70 à 100 pce (parties en poids pour cent parties d'élastomère), une charge renforçante, un système de réticulation, une résine thermoplastique comprenant des motifs polyphénylène éther éventuellement substitués, ladite résine présentant une masse moléculaire moyenne en nombre (Mn) inférieure à 6000 g/mol.

De préférence, l'invention concerne une composition telle que définie ci-dessus, dans laquelle ladite résine présente une masse moléculaire moyenne en nombre (Mn) inférieure à 3500 g/mol, plus préférentiellement comprise dans un domaine allant de 700 à 2500 g/mol.

Préférentiellement, l'invention concerne une composition telle que définie ci-dessus, dans laquelle l'élastomère diénique vinylaromatique présente un taux de vinylaromatique supérieur à 10%, de préférence compris entre 15% et 60%, plus préférentiellement entre 20% et 50%, de manière très préférentielle entre 30 et 50% et de manière encore plus préférentielle entre 35 et 50%.

Alternativement et préférentiellement également, l'invention concerne une composition telle que définie ci-dessus, dans laquelle l'élastomère diénique vinylaromatique présente un taux de vinylaromatique compris entre 10% et 30%, et dans laquelle ladite résine présente une masse moléculaire moyenne en nombre (Mn) inférieure à 2200 g/mol. Plus préférentiellement, l'élastomère diénique vinylaromatique présente un taux de vinylaromatique compris entre 12% et 28%, et ladite résine présente une masse moléculaire moyenne en nombre (Mn) inférieure à 2000 g/mol. Plus préférentiellement encore, l'élastomère diénique vinylaromatique présente un taux de vinylaromatique compris entre 14% et 20%, et ladite résine présente une masse moléculaire moyenne en nombre (Mn) comprise dans un domaine allant de 700 à 2000 g/mol.

Préférentiellement, l'élastomère diénique vinylaromatique est choisi dans le groupe constitué par les copolymères de butadiène et de styrène, les copolymères d'isoprène et de styrène, les copolymères de butadiène, d'isoprène et de styrène et les mélanges de ces élastomères, et de préférence dans le groupe constitué par les copolymères de butadiène et de styrène et le mélanges de ces derniers. De préférence également, le taux d'élastomère diénique vinylaromatique est compris dans un domaine allant de 85 à 100 pce.

De préférence, l'invention concerne une composition telle que définie ci-dessus, dans laquelle la résine thermoplastique à base de motifs polyphénylène éther éventuellement substitués présente une température de transition vitreuse (Tg), mesurée par DSC selon la norme ASTM D3418 de 1999, comprise dans un domaine allant de 0 à 215°C, de préférence, de 5 à 200°C et plus préférentiellement, de 5 à 185°C.

De manière préférentielle, l'invention concerne une composition telle que définie ci-dessus, dans laquelle la résine thermoplastique à base de motifs polyphénylène éther éventuellement substitués est un composé comprenant majoritairement des motifs polyphénylène de formule générale (I) : 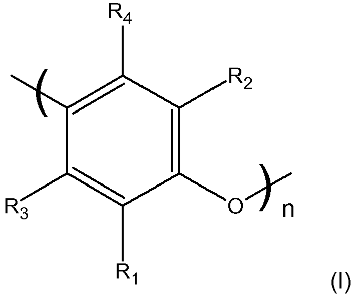 dans laquelle :
- R1, R2, R3 et R4 représentent indépendamment les uns des autres des groupements identiques ou différents choisis parmi les groupements hydrogène, hydroxy, alkoxy, halogène, amino, alkylamino, dialkylamino ou les groupements hydrocarbonés comportant au moins 2 atomes de carbone, éventuellement interrompus par des hétéroatomes et éventuellement substitués ; R1 et R3 d'une part et R2 et R4 d'autre part pouvant former ensemble avec les atomes de carbones auxquels ils se rattachent un ou plusieurs cycles accolés au cycle benzénique du composé de formule (I)
- n est un entier compris dans un domaine allant de 3 à 300.

De préférence, l'invention concerne une composition telle que définie ci-dessus, dans laquelle la résine thermoplastique à base de motifs polyphénylène éther éventuellement substitués est un composé comprenant majoritairement des motifs polyphénylène de formule générale (I) dans laquelle R1, R2, R3 et R4 représentent indépendamment les uns des autres des groupements identiques ou différents choisis parmi :
- l'hydrogène,
- les groupements hydroxy, alkoxy, halogène, amino, alkylamino, dialkylamino,
- les groupements alkyles linéaire, ramifiés ou cycliques, comprenant de 1 à 25 atomes de carbone (de préférence de 2 à 18), éventuellement interrompus par des hétéroatomes choisis parmi l'azote, l'oxygène et le soufre, et éventuellement substitués par des groupements hydroxy, alkoxy, amino, alkylamino, dialkylamino, ou halogène.
- les groupements aryles comprenant de 6 à 18 atomes de carbones (de préférence de 6 à 12), éventuellement substitués par des groupements hydroxy, alkoxy, amino, alkylamino, dialkylamino, alkyle, ou halogène,

Préférentiellement, l'invention concerne une composition telle que définie ci-dessus, dans laquelle la résine thermoplastique à base de motifs polyphénylène éther éventuellement substitués est un composé comprenant majoritairement des motifs polyphénylène de formule générale (I) dans laquelle R1, R2, R3 et R4 représentent indépendamment les uns des autres des groupements identiques ou différents choisis parmi :
- l'hydrogène,
- les groupements hydroxy, alkoxy comportant de 1 à 6 atomes de carbone, halogène, amino, alkylamino comportant de 1 à 6 atomes de carbone, dialkylamino comportant de 2 à 12 atomes de carbone,
- les groupements alkyles linéaire, ramifiés ou cycliques, comprenant de 1 à 12 atomes de carbone (de préférence de 2 à 6), éventuellement interrompus par des hétéroatomes et éventuellement substitués par des groupements hydroxy, alkoxy comportant de 1 à 6 atomes de carbone, amino, alkylamino comportant de 1 à 6 atomes de carbone, dialkylamino comportant de 2 à 12 atomes de carbone, ou halogène.
- les groupements aryles comprenant de 6 à 18 atomes de carbones (de préférence de 6 à 12), éventuellement substitués par des groupements hydroxy, alkoxy comportant de 1 à 6 atomes, amino, alkylamino comportant de 1 à 6 atomes, dialkylamino comportant de 2 à 12 atomes de carbone, alkyle comportant de 1 à 12 atomes de carbone, ou halogène.

De préférence, l'invention concerne une composition telle que définie ci-dessus, dans laquelle R1 et R2 représentent un groupement alkyle et en particulier un groupe méthyle ; et R3 et R4 représentent des atomes d'hydrogène.

De préférence encore, l'invention concerne une composition telle que définie ci-dessus, dans laquelle la résine thermoplastique à base de motifs polyphénylène éther éventuellement substitués est un composé comprenant majoritairement des motifs polyphénylène de formule générale (I) dans laquelle n est un entier compris dans un domaine allant de 3 à 50, de préférence de 5 à 30 et plus préférentiellement de 6 à 20.

Préférentiellement, l'invention concerne une composition telle que définie ci-dessus, dans laquelle la résine thermoplastique à base de motifs polyphénylène éther éventuellement substitués est un composé comprenant à plus de 80% en poids, des motifs polyphénylène de formule générale (I), de préférence à plus de 95% en poids.

De préférence, l'invention concerne une composition telle que définie ci-dessus, dans laquelle le taux de ladite résine thermoplastique à base de motifs polyphénylène éther éventuellement substitués est compris dans un domaine allant de 1 à 90 pce, de préférence de 2 à 80 pce, plus préférentiellement, de 3 à 60 pce, mieux de 5 à 60 pce.

De manière préférentielle, l'invention concerne une composition telle que définie ci-dessus, dans laquelle la charge renforçante comporte du noir de carbone et/ou de la silice.

De manière préférentielle également, l'invention concerne une composition telle que définie ci-dessus, dans laquelle la charge renforçante représente entre 20 et 250 pce, plus préférentiellement entre 30 et 180 pce.

De préférence, l'invention concerne une composition telle que définie ci-dessus, dans laquelle la charge renforçante comporte majoritairement du noir de carbone. Préférentiellement, le noir de carbone représente de 40 à 150 pce, de préférence de 50 à 120 pce.

Alternativement et de préférence également, l'invention concerne une composition telle que définie ci-dessus, dans laquelle la charge renforçante comporte majoritairement de la silice. Préférentiellement, la silice représente de 40 à 150 pce, de préférence de 50 à 120 pce.

L'invention a également pour objet les articles en caoutchouc finis ou semi-finis comportant une composition de caoutchouc conforme à l'invention.

L'invention a également pour objet les pneumatiques comportant une composition de caoutchouc conforme à l'invention, et notamment les pneumatiques dans lesquels la bande de roulement comporte une composition de caoutchouc selon l'invention.

Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route, engins agricoles ou de génie civil, avions, autres véhicules de transport ou de manutention.

L'invention ainsi que ses avantages seront aisément compris à la lumière de la description et des exemples de réalisation qui suivent.

### I. Tests

Les compositions de caoutchouc sont caractérisées, avant et après cuisson, comme indiqué ci-après.

### I.1. Propriétés dynamiques après cuisson

Les propriétés dynamiques G* sont mesurées sur un viscoanalyseur (Metravib VA4000), selon la norme ASTM D 5992-96. On enregistre la réponse d'un échantillon de composition vulcanisée (c'est dire cuit jusqu'à un taux de conversion d'au moins 90%) (éprouvette cylindrique de 2 mm d'épaisseur et de 78,5 mm² de section), soumis à une sollicitation sinusoïdale en cisaillement simple alterne, a la fréquence de 10 Hz.

On effectue un balayage en température à vitesse de montée en température constante de +1.5°C/min à contrainte de cisaillement crête-crête imposée de 0,7MPa. L'éprouvette est sollicitée en cisaillement sinusoïdal à 10 Hz, symétriquement autour de sa position d'équilibre. Les résultats exploités sont le module complexe de cisaillement dynamique (G*), la partie visqueuse du module de cisaillement (G"), notée G"(T).

La température de transition vitreuse (notée Tg) selon l'invention correspond à la température à laquelle on observe le maximum observé de G" lors du balayage en température. Ainsi, dans la présente description, sauf indication expresse différente, la Tg est définie comme la température à laquelle on observe le maximum de G" (G" représentant de manière connue la partie visqueuse du module de cisaillement), lors du balayage en température d'un échantillon réticulé soumis à une sollicitation sinusoïdale à contrainte imposée de 0,7 MPa et à une fréquence de 10 Hz. Comme indiqué précédemment, cette Tg est mesurée lors de la mesure des propriétés dynamiques, sur un viscoanalyseur (Metravib VA4000), selon la norme ASTM D 5992-96. L'échantillon pour cette mesure de Tg est réticulé avec du soufre, à un taux d'environ 1,5 pce et du N-cyclohexyl-benzothiazyl sulphénamide (CBS) à un taux d'environ 2 pce.

### I.2. Rhéométrie

Les mesures sont effectuées à 150°C avec un rhéomètre à chambre oscillante, selon la norme DIN 53529 - partie 3 (juin 1983). L'évolution du couple rhéométrique, ΔCouple, en fonction du temps décrit l'évolution de la rigidification de la composition par suite de la réaction de vulcanisation. Les mesures sont traitées selon la norme DIN 53529 - partie 2 (mars 1983) : To est le délai d'induction, c'est à dire le temps nécessaire au début de la réaction de vulcanisation ; Tα, (par exemple T99) est le temps nécessaire pour atteindre une conversion de α%, c'est à dire a% (par exemple 99%) de l'écart entre les couples minimum et maximum. On mesure également la constante de vitesse de conversion notée K (exprimée en min-1), d'ordre 1, calculée entre 30% et 80% de conversion, qui permet d'apprécier la cinétique de vulcanisation.

### I.3. Mesure du taux de particules

Les mesures sont effectuées au microscope optique à transmission (MOT) sur un appareil de chez Olympus, de référence BX-51. Les observations sont réalisées en mode fond clair (« Bright Field ») à un grossissement de « fois 40 » (Objectif x40 - grandissement additionnel x1 - grandissement bague camera x1). Les images sont obtenues en noir et blanc par une caméra d'acquisition Olympus DP-50. Pour ce grossissement, le champ d'observation correspondant à une image est de 160 µm x 120 µm. Afin de couvrir une surface significative, les mesures de taux surfacique de particules sont réalisées sur un minimum de 10 images. Les échantillons observés sont obtenus par cryomicrotomie à -60°C et avec une consigne de coupe à 2 µm.

Au sens de la présente demande, lorsqu'on parle de compatibilité de la résine PPE et de l'élastomère diénique vinylaromatique majoritaire, on entend par compatible que cette résine PPE ne forme pas de particule dans la composition, c'est-à-dire qu'on observera, dans un mélange de la résine PPE avec l'élastomère diénique vinylaromatique, une composition présentant moins de 10 % de son volume sous la forme de particules d'une taille supérieure à 2 micromètres (µm). Plus préférentiellement, on observera, dans un mélange de la résine PPE avec l'élastomère diénique vinylaromatique, une composition présentant moins de 5 % de son volume sous la forme de particules d'une taille supérieure à 2 micromètres et de préférence moins de 2 %. Cette observation du taux de particule et de leurs tailles pourra se faire au MOT comme décrit plus haut.

Une composition dans laquelle moins de 10 % de ladite résine se présente sous la forme de particules d'une taille supérieure à 2 micromètres correspond à une composition dans laquelle, si on observe 10 images contiguës sur des coupes de 2 µm au MOT comme décrit plus haut, on trouvera en moyenne moins de 10 % de la surface observée correspondant à des particules d'une taille supérieure à 2 µm.

### I. Conditions de réalisation de l'invention

La composition de caoutchouc selon l'invention est à base d'au moins un élastomère diénique vinylaromatique à un taux compris dans un domaine allant de 70 à 100 pce (parties en poids pour cent parties d'élastomère), une charge renforçante, un système de réticulation, une résine thermoplastique comprenant des motifs polyphénylène éther éventuellement substitués, ladite résine présentant une masse moléculaire moyenne en nombre (Mn) inférieure à 6000 g/mol.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères.

### II.1. Elastomères

La composition de caoutchouc selon l'invention comprend un élastomère diénique vinylaromatique à un taux compris dans un domaine allant de 70 à 100 pce (parties en poids pour cent parties d'élastomère).

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces définitions étant données, on entend plus particulièrement par élastomère diénique vinylaromatique tout copolymère obtenu par copolymérisation d'un ou plusieurs diènes conjugués entre eux ou avec un ou plusieurs composés vinyle aromatique ayant de 8 à 20 atomes de carbone;

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène.

A titre de composés vinylaromatiques conviennent par exemple le styrène, l'alphaméthylstyrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères diéniques vinylaromatiques (tels que SBR) du type époxydés.

De préférence, l'élastomère diénique vinylaromatique de la composition conforme à l'invention possède un taux de vinylaromatique supérieur à 10%, de préférence compris entre 15% et 60%, plus préférentiellement entre 20% et 50%, de manière très préférentielle entre 30 et 50% et de manière encore plus préférentielle entre 35 et 50%. Plus préférentiellement l'élastomère diénique vinylaromatique de la composition conforme à l'invention est un élastomère diénique styrénique (c'est-à-dire que la partie vinylaromatique est une partie styrénique), avec un taux de styrène supérieur à 10%, de préférence compris entre 15% et 50%, plus préférentiellement entre 20% et 50%, de manière très préférentielle entre 30 et 50% et de manière encore plus préférentielle entre 35 et 50%.

Alternativement et préférentiellement également, l'élastomère diénique vinylaromatique de la composition conforme à l'invention possède un taux de vinylaromatique compris entre 10% et 30%, de préférence compris entre 12% et 28%, plus préférentiellement entre 14% et 20%. Plus préférentiellement l'élastomère diénique vinylaromatique de la composition conforme à l'invention est un élastomère diénique styrénique (c'est-à-dire que la partie vinylaromatique est une partie styrénique), avec un taux de styrène compris entre 10% et 30%, de préférence compris entre 12% et 28%, plus préférentiellement entre 14% et 20%.

De préférence, l'élastomère diénique vinylaromatique de la composition conforme à l'invention est choisi préférentiellement dans le groupe des élastomères diéniques styréniques fortement insaturés constitué par les copolymères styréniques de butadiène, les copolymères styréniques d'isoprène et les mélanges de ces élastomères. De tels copolymères sont plus préférentiellement choisis dans le groupe constitué par les copolymères de butadiène-styrène (SBR), les copolymères d'isoprène-styrène (SIR) et les copolymères d'isoprène-butadiène-styrène (SBIR).

Conviennent notamment, les copolymères de butadiène-styrène (SBR) et en particulier ceux ayant une Tg (température de transition vitreuse) mesurée par DSC selon la norme ASTM D3418 de 1999 comprise entre 20°C et -70°C et plus particulièrement entre 0°C et -50°C, une teneur en styrène comprise entre 10% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

Conviennent également les copolymères isoprène-styrène (SIR) et notamment ceux ayant une teneur en styrène comprise entre 15% et 60% en poids et plus particulièrement entre 20% et 50% et une Tg, mesurée par DSC selon la norme ASTM D3418 de 1999, comprise entre 25°C et -50°C.

Dans le cas des copolymères de butadiène-styrène-isoprène (SBIR) conviennent notamment ceux ayant une teneur en styrène comprise entre 15% et 60% en poids, plus particulièrement entre 20% et 50%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg, mesurée par DSC selon la norme ASTM D3418 de 1999, comprise entre 20°C et -60°C.

De manière très préférentielle, l'élastomère diénique vinylaromatique de la composition conforme à l'invention est un SBR. De manière connue, le SBR peut être préparé en émulsion ("ESBR") ou préparé en solution ("SSBR"). Dans le cas d'un élastomère SBR (ESBR ou SSBR), on utilise notamment un SBR ayant une teneur en styrène moyenne, par exemple comprise entre 25 et 50% en poids, de préférence entre 35% et 50% en poids.

Les compositions de l'invention peuvent contenir un seul élastomère diénique vinylaromatique ou un mélange de plusieurs élastomères diéniques vinylaromatiques, le ou les élastomères diéniques vinylaromatiques, toujours majoritaires, pouvant être utilisés en association avec d'autres élastomères connus de l'homme de l'art tels que par exemple, un caoutchouc naturel (NR) ou un polybutadiène (BR).

Le taux d'élastomère diénique vinylaromatique est compris dans un domaine allant de 70 à 100 pce, plus préférentiellement de 85 à 100 pce et très préférentiellement ce taux est de 100 pce, c'est-à-dire qu'il n'y a que des élastomères diéniques vinylaromatiques dans la composition.

### II.2. Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N 115,

N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m2/g, plus préférentiellement comprise entre 60 et 300 m2/g.

De manière préférentielle, le taux de charge renforçante totale (noir de carbone et/ou charge inorganique renforçante telle que silice) est compris entre 20 et 200 pce, plus préférentiellement entre 30 et 160 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un premier mode de réalisation préférentiel de l'invention, on utilise le noir de carbone comme charge renforçante majoritaire entre 60 et 160 pce, plus préférentiellement entre 70 et 150 pce.

Selon un autre mode de réalisation préférentiel de l'invention, on utilise la silice comme charge renforçante majoritaire entre 60 et 160 pce, plus préférentiellement entre 70 et 150 pce, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 5 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale suivante:

Z - A - Sx - A - Z ,

dans laquelle:
- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
- Z répond à l'une des formules ci-après: 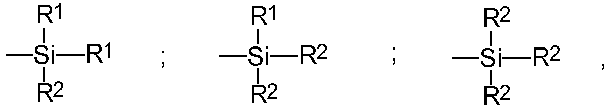 dans lesquelles:
   - les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
   - les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R2 = OH dans la formule ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 16 pce, plus préférentiellement entre 5 et 15 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.3. Résine PPE

La composition selon l'invention comprend une résine thermoplastique à base de motifs polyphénylène éther éventuellement substitués (en abrégé « résine PPE »). Ce type de composé est décrit par exemple dans l'encyclopédie « Ullmann's encyclopédia of industrial chemistry » éditée par VCH, vol A 21, pages 605-614, 5e édition,1992.

De manière connue, les résines PPE ont habituellement des masses moléculaires moyennes en nombre (Mn) variables, le plus souvent de 15000 à 30000 g/mol, dans le cas des hautes masses comme celles-ci, la Mn est mesurée de manière connue de l'homme de l'art par SEC (encore nommée GPC, comme dans la référence US4588806, colonne 8).

Pour les besoins de l'invention, on utilise pour la composition de l'invention une résine PPE possédant une masse Mn inférieure aux masses régulièrement rencontrées et notamment inférieure à 6000 g/mol, de préférence inférieure à 3500 g/mol et en particulier une Mn comprise dans un domaine variant de 700 à 2500 g/mol. ; ces préférences sont valables pour tous les élastomères diéniques vinylaromatiques utilisables selon l'invention et en particulier pour ceux présentant un taux de vinylaromatique compris entre 20% et 50%, de manière très préférentielle entre 30 et 50% et de manière encore plus préférentielle entre 35 et 50%. La masse moléculaire moyenne en nombre (Mn) des PPE de masse inférieure à 6000 g/mol est mesurée par RMN, la mesure classique par SEC n'étant pas suffisamment précise. Cette mesure par RMN est effectuée de manière connue de l'homme de l'art, soit par dosage des fonctions bout de chaine, soit par dosage des initiateurs de polymérisation, comme explicité par exemple dans « Application of NMR spectroscopy in molecular weight détermination of polymers » de Subhash C. Shit et Sukumar Maiti dans « European Polymer Journal » vol.22, n°12, pages 1001 à 1008 (1986).

Selon un mode particulièrement préféré pour l'invention, lorsque l'élastomère diénique vinylaromatique présente un taux de vinylaromatique compris entre 10% et 30%, de préférence compris entre 12% et 28%, plus préférentiellement entre 14% et 20%, on préfère pour la composition de l'invention une résine PPE possédant une masse Mn inférieure aux masses régulièrement rencontrées et notamment inférieure à 2200 g/mol, de préférence inférieure à 2000 g/mol et en particulier une Mn comprise dans un domaine variant de 700 à 2000 g/mol.

Préférentiellement, la valeur de l'indice de polydispersité Ip (rappel : Ip = Mw/Mn avec Mw masse moléculaire moyenne en poids et Mn masse moléculaire moyenne en nombre) de la résine PPE est inférieure ou égale à 5, plus préférentiellement inférieure ou égale à 3 et plus préférentiellement encore inférieure ou égale à 2.

La résine PPE utile aux besoins de l'invention présente préférentiellement une température de transition vitreuse (Tg), mesurée par DSC selon la norme ASTM D3418 de 1999 comprise dans un domaine allant de 0 à 215°C, de préférence de 5 à 200°C et plus préférentiellement de 5 à 185°C. En dessous de 0°C, la résine PPE ne permet pas un décalage de Tg suffisant dans la composition la comprenant et au-dessus de 215°C, on peut rencontrer des problèmes de fabrication notamment pour obtenir un mélange homogène.

De préférence, la résine PPE est un composé comprenant majoritairement des motifs polyphénylène de formule générale (I) : 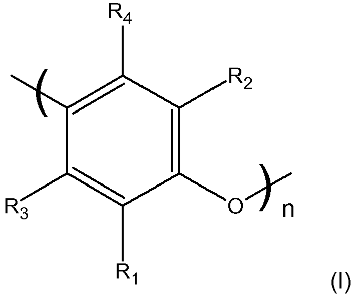 dans laquelle :
- R1, R2, R3 et R4 représentent indépendamment les uns des autres des groupements identiques ou différents choisis parmi l'hydrogène ; les groupements hydroxy, alkoxy, halogène, amino, alkylamino, dialkylamino ; les groupements hydrocarbonés comportant au moins 2 atomes de carbone, éventuellement interrompus par des hétéroatomes et éventuellement substitués ; R1 et R3 d'une part et R2 et R4 d'autre part peuvent former ensemble avec les atomes de carbones auxquels ils se rattachent un ou plusieurs cycles accolés au cycle benzénique du composé de formule (I)
- n est un entier compris dans un domaine allant de 3 à 300.

Préférentiellement, R1, R2, R3 et R4 représentent indépendamment les uns des autres des groupements identiques ou différents choisis parmi :
- l'hydrogène
- les groupements hydroxy, alkoxy, halogène, amino, alkylamino, dialkylamino,
- les groupements alkyles linéaire, ramifiés ou cycliques, comprenant de 1 à 25 atomes de carbone (de préférence de 2 à 18), éventuellement interrompus par des hétéroatomes choisis parmi l'azote, l'oxygène et le soufre, et éventuellement substitués par des groupements hydroxy, alkoxy, amino, alkylamino, dialkylamino, ou halogène.
- les groupements aryles comprenant de 6 à 18 atomes de carbones (de préférence de 6 à 12), éventuellement substitués par des groupements hydroxy, alkoxy, amino, alkylamino, dialkylamino, alkyle, ou halogène,

Plus préférentiellement, R1, R2, R3 et R4 représentent indépendamment les uns des autres des groupements identiques ou différents choisis parmi :
- l'hydrogène
- les groupements hydroxy, alkoxy comportant de 1 à 6 atomes de carbone, halogène, amino, alkylamino comportant de 1 à 6 atomes de carbone, dialkylamino comportant de 2 à 12 atomes de carbone,
- les groupements alkyles linéaire, ramifiés ou cycliques, comprenant de 1 à 12 atomes de carbone (de préférence de 2 à 6), éventuellement interrompus par des hétéroatomes et éventuellement substitués par des groupements hydroxy, alkoxy comportant de 1 à 6 atomes de carbone, amino, alkylamino comportant de 1 à 6 atomes de carbone, dialkylamino comportant de 2 à 12 atomes de carbone, ou halogène.
- les groupements aryles comprenant de 6 à 18 atomes de carbones (de préférence de 6 à 12), éventuellement substitués par des groupements hydroxy, alkoxy comportant de 1 à 6 atomes, amino, alkylamino comportant de 1 à 6 atomes, dialkylamino comportant de 2 à 12 atomes de carbone, alkyle comportant de 1 à 12 atomes de carbone, ou halogène.

Encore plus préférentiellement, R1 et R2 représentent un groupement alkyle et en particulier un groupe méthyle ; et R3 et R4 représentent des atomes d'hydrogène. Dans ce cas, la résine PPE est un poly(2,6-diméthyl-1,4-phénylène éther).

De manière préférentielle également, n est un entier compris dans un domaine allant de 3 à 50, plus préférentiellement de 5 à 30, de préférence de 6 à 20.

De préférence, la résine PPE est un composé comprenant à plus de 80% en poids, et plus préférentiellement encore à plus de 95% en poids, des motifs polyphénylène de formule générale (I).

A titre d'exemples, on peut citer le poly(2,6-diméthyl-1,4-phénylène éther) et notamment le « Noryl SA 120 » de la socité Sabic ou le « Xyron S201 » de la société Asahi Kasei.

La résine PPE utile aux besoins de l'invention est préférentiellement « compatible » avec l'élastomère diénique vinylaromatique de la composition. Comme défini précédemment, on entend par compatible que cette résine PPE ne forme pas de particules dans la composition, c'est-à-dire qu'on nommera compatible une résine qui, en mélange avec l'élastomère diénique vinylaromatique donnera une composition présentant moins de 10 % de son volume sous la forme de particules d'une taille supérieure à 2 micromètres, de préférence moins de 5% et plus préférentiellement moins de 2%. La méthode de mesure, au MOT, est décrite précédemment. Alternativement et préférentiellement également, cette résine PPE est compatible avec l'élastomère diénique vinylaromatique de telle manière qu'elle est capable d'augmenter la Tg de l'élastomère c'est-à-dire qu'elle permettra à la température de transition vitreuse, Tg, d'un mélange dudit élastomère diénique vinylaromatique et de ladite résine d'augmenter de plus de 5°C, préférentiellement de plus de 10°C, de préférence de plus de 12°C pour 25 parties en poids pour cent parties en poids d'élastomère (pce) de ladite résine, par rapport à la Tg dudit élastomère diénique vinylaromatique seul.

Le taux de résine PPE dans la composition est préférentiellement compris dans un domaine allant de 1 à 90 pce, plus préférentiellement de 2 à 80 pce, plus préférentiellement encore de 3 à 60 pce et très préférentiellement de 5 à 60 pce.

### II.4. Système de réticulation

Le système de réticulation peut être un système de vulcanisation, il est préférentiellement à base de soufre ou de donneurs de soufre et d'accélérateur primaire de vulcanisation (préférentiellement 0,5 à 10,0 pce d'accélérateur primaire). A ce système de vulcanisation viennent optionnellement s'ajouter, divers accélérateurs secondaires et/ou activateurs de vulcanisation connus tels qu'oxyde de zinc (préférentiellement pour 0,5 à 10,0 pce), acide stéarique ou autres. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-terbutyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### II.5. Additifs divers

Les compositions de caoutchouc des bandes de roulement conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des résines renforçantes ou des agents plastifiants. De préférence cet agent plastifiant est une résine hydrocarbonée solide autre que la résine précédemment décrite (ou résine plastifiante), une huile d'extension (ou huile plastifiante), ou un mélange des deux.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### 11.6. Préparation des compositions de caoutchouc

Les compositions utilisées dans les bandes de roulement de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer à aux élastomères, notamment à l'élastomère diénique vinylaromatique, au cours d'une première étape (dite "non-productive"), la charge renforçante, la résine PPE et les éventuels autres ingrédients de la composition à l'exception du système de réticulation, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (les élastomères, la charge renforçante, la résine PPE et autres), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

L'invention concerne les pneumatiques et les produits semi-finis pour pneumatiques précédemment décrits, les articles de caoutchouc tant à l'état cru (c'est à dire, avant cuisson) qu'à l'état cuit (c'est à dire, après réticulation ou vulcanisation).

### 11.7. Pneumatique de l'invention

La composition de caoutchouc selon l'invention peut être utilisée dans différentes parties du pneumatique, notamment dans le sommet, la carcasse, la zone du bourrelet, la zone du flanc et la bande de roulement (incluant notamment la sous-couche de la bande de roulement).

Selon un mode préférentiel de réalisation de l'invention, la composition de caoutchouc précédemment décrite peut être utilisée dans le pneumatique comme une couche élastomère rigide dans au moins une partie du pneumatique.

Par « couche » élastomère, on entend tout élément tridimensionnel, en composition de caoutchouc (ou « élastomère », les deux étant considérés comme synonymes), de forme et d'épaisseur quelconques, notamment feuille, bande, ou autre élément de section droite quelconque, par exemple rectangulaire ou triangulaire.

Tout d'abord, la couche élastomère peut être utilisée en sous couche de bande de roulement disposée dans le sommet du pneumatique, entre d'une part la bande de roulement, i.e., la portion destinée à entrer au contact de la route lors du roulage, et d'autre part la ceinture renforçant ledit sommet. L'épaisseur de cette couche élastomère est de préférence comprise dans un domaine allant de 0,5 à 10 mm, notamment dans un domaine de 1 à 5 mm.

Selon un autre mode préférentiel de réalisation de l'invention, la composition de caoutchouc selon l'invention peut être utilisée pour former une couche élastomère, disposée dans la région de la zone du bourrelet du pneumatique, radialement entre la nappe carcasse, la tringle et le retournement de la nappe carcasse.

Un autre mode préférentiel de réalisation de l'invention peut être l'utilisation de la composition selon l'invention pour former une couche élastomère disposée dans la zone du flanc du pneumatique.

Alternativement, la composition de l'invention peut avantageusement être utilisée dans la bande roulement du pneumatique.

### III. EXEMPLES DE REALISATION DE L'INVENTION

### 111.1. Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique vinylaromatique, la charge renforçante et la résine PPE, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 180°C.

On récupère le mélange ainsi obtenu, on le refroidit puis on incorpore du soufre, un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### 111.2. Essais de compositions de caoutchouc

Cet essai illustre des compositions de caoutchouc utilisées dans des bande de roulement de pneumatiques. Ces compositions permettent d'augmenter la Tg du mélange par rapport à une composition de caoutchouc conventionnelle (comportant une résine plastifiante conventionnelle). Pour cela, des compositions de caoutchouc ont été préparées comme indiqué précédemment.

Les compositions témoins C1, C2 et C3 sont des compositions conventionnelles pour l'homme du métier, utilisées pour fabriquer des mélanges pour bande de roulement de pneumatique.

Les compositions de l'invention C4 à C6 contiennent une résine thermoplastique à base de motifs polyphénylène éther éventuellement substitués (en abrégé « résine PPE »), telle que précédemment décrite en remplacement de la résine plastifiante de coupe C5/C9 usuelle pour l'homme de l'art et utilisée dans les témoins C2 et C3. Les formulations (en pce ou parties en poids pour cent parties d'élastomère) et leurs propriétés mécaniques ont été résumées dans les tableaux 1 et 2 ci-dessous.

**Tableau 1**

| Composition | C1 | C2 | C3 | C4 | C5 | C6 | C7 | C8 |
|---|---|---|---|---|---|---|---|---|
| SBR (1) | 100 | 100 | 100 | 100 | 100 | 100 | 100 | 100 |
| Noir de carbone (2) | 60 | 75 | 85 | 75 | 85 | 85 | 75 | 85 |
| Résine plastifiante (3) | - | 25 | 50 | - | - | - | - | - |
| Résine PPE 1 (4) | - | - | - | 25 | 50 | - | - | - |
| Résine PPE 2 (5) | - | - | - | - | - | 50 | - | - |
| Résine PPE 3 (6) | - | - | - | - | - | - | 25 | 50 |
| ZnO (7) | 3 | 3 | 3 | 3 | 3 | 3 | 3 | 3 |
| Acide stéarique (8) | 2 | 2 | 2 | 2 | 2 | 2 | 2 | 2 |
| 6PPD (9) | 2 | 2 | 2 | 2 | 2 | 2 | 2 | 2 |
| Soufre | 1,4 | 1,4 | 1,4 | 1,4 | 1,4 | 1,4 | 1,4 | 1,4 |
| CBS (10) | 2,1 | 2,1 | 2,1 | 2,1 | 2,1 | 2,1 | 2,1 | 2,1 |

| | | | | | | | | |
|---|---|---|---|---|---|---|---|---|
| (1) SBR avec 41% de motif styrène et 24% de motif 1,2 de la partie butadiénique (Tg mesurée par DSC selon la norme ASTM D3418 de 1999 de -25°C) ; (2) Grade ASTM N234 (société Cabot) ; (3) Résine C5/C9 « Escorez 2173 » de la société Exxon ; (4) Résine PPE 1 : Poly(2,6-diméthyl-1,4-phénylène éther) « Noryl SA120 » de la société Sabic, Mn = 2350 g/mol ; (5) Résine PPE 2 : Poly(2,6-diméthyl-1,4-phénylène éther) « Xyron S201 A » de la société Asahi Kasei, Mn = 19000g/mol; (6) Résine PPE 3 : Poly(2,6-diméthyl-1,4-phénylène éther) « Noryl SA90 » de la société Sabic, Mn = 1800 g/mol (7) Oxyde de zinc (grade industriel - société Umicore) ; (8) Stéarine (« Pristerene 4931 » de la société Uniqema) ; (9) N-1,3-diméthylbutyl-N-phénylparaphénylènediamine Santoflex 6-PPD de la société Flexsys; (10) N-cyclohexyl-benzothiazyl sulphénamide (Santocure CBS de la société Flexsys). | | | | | | | | |

**Tableau 2**

| Composition | C1 | C2 | C3 | C4 | C5 | C6 | C7 | C8 |
|---|---|---|---|---|---|---|---|---|
| Tg | -17°C | -10.5°C | -6.5°C | -1°C | +8.5°C | -12°C | -2.8°C | +12.7°C |
| % vol particules > 2µm* | < 2% | < 2% | < 2% | < 2% | < 2% | >10% | < 2% | < 2% |

| | | | | | | | | |
|---|---|---|---|---|---|---|---|---|
| * mesure effectuée en mélange SBR + résine PPE | | | | | | | | |

On note que le remplacement de la résine usuelle par une résine PPE dans les compositions de l'invention C4 et C5 permet d'obtenir une augmentation de la température correspondant au maximum de G"(T), donc une augmentation de la Tg du mélange, par rapport aux compositions témoins respectives C2 et C3, représentatif de l'effet plastifiant de la résine PPE supérieur à celui des résines plastifiantes conventionnelles. On note également que la résine utilisée dans la composition C6, possédant une masse Mn supérieure à 6000 g/mol ne permet pas d'obtenir cet effet plastifiant.

Pour les compositions de l'invention, grâce à cet effet plastifiant supérieur aux résines plastifiantes conventionnelles, il est possible de diminuer le taux de résine utilisée et par là même de réduire le collant à cru induit par les résines plastifiantes et donc de faciliter la fabrication des mélanges.

### Exemples 2 et 3

Les exemples 2 et 3 présentés ci-dessous sont des illustrations complémentaires de l'invention, dans des compositions de caoutchouc dans lesquelles la nature de l'élastomère diénique vinylaromatique et la nature de la charge varient. L'exemple 2, comme l'exemple 1 présente des compositions dans lesquelles le noir de carbone est la charge renforçante majoritaire, tandis que l'exemple 3 présente des compositions dans lesquelles la silice est la charge renforçante majoritaire.

### Exemple 2

Dans cet exemple l'élastomère diénique vinylaromatique présente une Tg de -48°C.

**Tableau 3**

| Composition | C1 | C2 | C3 | C4 | C5 | C6 | C7 | C8 |
|---|---|---|---|---|---|---|---|---|
| SBR (1) | 100 | 100 | 100 | 100 | 100 | 100 | 100 | 100 |
| Noir de carbone (2) | 60 | 75 | 85 | 75 | 85 | 85 | 75 | 85 |
| Résine plastifiante (3) | - | 25 | 50 | - | - | - | - | - |
| Résine PPE 1 (4) | - | - | - | 25 | 50 | - | - | - |
| Résine PPE 2 (5) | - | - | - | - | - | 50 | - | - |
| Résine PPE 3 (6) | - | - | - | - | - | - | 25 | 50 |
| ZnO (7) | 3 | 3 | 3 | 3 | 3 | 3 | 3 | 3 |
| Acide stéarique (8) | 2 | 2 | 2 | 2 | 2 | 2 | 2 | 2 |
| 6PPD (9) | 2 | 2 | 2 | 2 | 2 | 2 | 2 | 2 |
| Soufre | 1,4 | 1,4 | 1,4 | 1,4 | 1,4 | 1,4 | 1,4 | 1,4 |
| CBS (10) | 2,1 | 2,1 | 2,1 | 2,1 | 2,1 | 2,1 | 2,1 | 2,1 |

| | | | | | | | | |
|---|---|---|---|---|---|---|---|---|
| (1) SBR avec 26,5% de motif styrène et 24% de motif 1,2 de la partie butadiénique (Tg mesurée par DSC selon la norme ASTM D3418 de 1999 de -48°C) ; (2) Grade ASTM N234 (société Cabot) ; (3) Résine C5/C9 « Escorez 2173 » de la société Exxon ; (4) Résine PPE 1 : Poly(2,6-diméthyl-1,4-phénylène éther) « Noryl SA120 » de la société Sabic, Mn = 2350 g/mol ; (5) Résine PPE 2: Poly(2,6-diméthyl-1,4-phénylène éther) « Xyron S201 A » de la société Asahi Kasei, Mn = 19000g/mol; (6) Résine PPE 3 : Poly(2,6-diméthyl-1,4-phénylène éther) « Noryl SA90 » de la société Sabic, Mn = 1800 g/mol (7) Oxyde de zinc (grade industriel - société Umicore) ; (8) Stéarine (« Pristerene 4931 » de la société Uniqema) ; (9) N-1,3-diméthylbutyl-N-phénylparaphénylènediamine Santoflex 6-PPD de la société Flexsys; (10) N-cyclohexyl-benzothiazyl sulphénamide (Santocure CBS de la société Flexsys). | | | | | | | | |

**Tableau 4**

| Composition | C1 | C2 | C3 | C4 | C5 | C6 | C7 | C8 |
|---|---|---|---|---|---|---|---|---|
| Tg | -36.7°C | -28.9°C | -22.3°C | -27.8°C | -22.2°C | -35.5°C | -22.5°C | -17.8°C |
| % vol particules > 2µm* | < 2% | < 2% | < 2% | < 2% | < 2% | >10% | < 2% | < 2% |

| | | | | | | | | |
|---|---|---|---|---|---|---|---|---|
| * mesure effectuée en mélange SBR + résine PPE | | | | | | | | |

### Exemple 3

Dans cet exemple l'élastomère diénique vinylaromatique présente une Tg de -25°C.

**Tableau 5**

| Composition | C1 | C2 | C3 | C4 | C5 | C6 | C7 | C8 |
|---|---|---|---|---|---|---|---|---|
| SBR (1) | 100 | 100 | 100 | 100 | 100 | 100 | 100 | 100 |
| Silice (2) | 65 | 85 | 100 | 85 | 100 | 100 | 85 | 100 |
| Résine plastifiante (3) | - | 25 | 50 | - | - | - | - | - |
| Résine PPE 1 (4) | - | - | - | 25 | 50 | - | - | - |
| Résine PPE 2 (5) | - | - | - | - | - | 50 | - | - |
| Résine PPE 3 (6) | - | - | - | - | - | - | 25 | 50 |
| Silane (7) | 5 | 6,5 | 8 | 6,5 | 8 | 8 | 6,5 | 8 |
| DPG (8) | 1 | 1,4 | 1,7 | 1,4 | 1,7 | 1,7 | 1,4 | 1,7 |
| ZnO (9) | 3 | 3 | 3 | 3 | 3 | 3 | 3 | 3 |
| Acide stéarique (10) | 2 | 2 | 2 | 2 | 2 | 2 | 2 | 2 |
| 6PPD (11) | 2 | 2 | 2 | 2 | 2 | 2 | 2 | 2 |
| Soufre | 1,4 | 1,4 | 1,4 | 1,4 | 1,4 | 1,4 | 1,4 | 1,4 |
| CBS (12) | 2,1 | 2,1 | 2,1 | 2,1 | 2,1 | 2,1 | 2,1 | 2,1 |

| | | | | | | | | |
|---|---|---|---|---|---|---|---|---|
| (1) SBR avec 41% de motif styrène et 24% de motif 1,2 de la partie butadiénique (Tg mesurée par DSC selon la norme ASTM D3418 de 1999 de -25°C) ; (2) Silice « Zeosil1165MP » de la société Solvay de surface BET 160m²/g ; (3) Résine C5/C9 « Escorez 2173 » de la société Exxon ; (4) Résine PPE 1 : Poly(2,6-diméthyl-1,4-phénylène éther) « Noryl SA120 » de la société Sabic, Mn = 2350 g/mol ; (5) Résine PPE 2: Poly(2,6-diméthyl-1,4-phénylène éther) « Xyron S201 A » de la société Asahi Kasei, Mn = 19000g/mol; (6) Résine PPE 3 : Poly(2,6-diméthyl-1,4-phénylène éther) « Noryl SA90 » de la société Sabic, Mn = 1800 g/mol (7) Agent de couplage TESPT : « SI69 » de la société Evonik (8) Diphénylguanidine : « Perkacit DPG » de la société Flexsys (9) Oxyde de zinc (grade industriel - société Umicore) ; (10) Stéarine (« Pristerene 4931 » de la société Uniqema) ; (11) N-1,3-diméthylbutyl-N-phénylparaphénylènediamine Santoflex 6-PPD de la société Flexsys; (12) N-cyclohexyl-benzothiazyl sulphénamide (Santocure CBS de la société Flexsys). | | | | | | | | |

**Tableau 6**

| Composition | C1 | C2 | C3 | C4 | C5 | C6 | C7 | C8 |
|---|---|---|---|---|---|---|---|---|
| Tg | -18°C | -12°C | -7,9°C | -5°C | +4,3°C | -14°C | -2,8°C | +8,3°C |
| % vol particules > 2µm* | < 2% | < 2% | < 2% | < 2% | < 2% | >10% | < 2% | < 2% |

| | | | | | | | | |
|---|---|---|---|---|---|---|---|---|
| * mesure effectuée en mélange SBR + résine PPE | | | | | | | | |

## Revendications

1. Composition de caoutchouc à base d'au moins un élastomère diénique vinylaromatique à un taux compris dans un domaine allant de 70 à 100 pce (parties en poids pour cent parties d'élastomère), une charge renforçante, un système de réticulation, une résine thermoplastique comprenant des motifs polyphénylène éther éventuellement substitués, ladite résine présentant une masse moléculaire moyenne en nombre (Mn) inférieure à 6000 g/mol, de préférence inférieure à 3500 g/mol.

2. Composition selon la revendication 1 dans laquelle l'élastomère diénique vinylaromatique présente un taux de vinylaromatique supérieur à 10%, de préférence compris entre 15% et 60%.

3. Composition selon la revendication 1 , dans laquelle l'élastomère diénique vinylaromatique présente un taux de vinylaromatique compris entre 10% et 30%, et dans laquelle ladite résine présente une masse moléculaire moyenne en nombre (Mn) inférieure à 2200 g/mol.

4. Composition selon la revendication 3, dans laquelle l'élastomère diénique vinylaromatique présente un taux de vinylaromatique compris entre 12% et 28%, et dans laquelle ladite résine présente une masse moléculaire moyenne en nombre (Mn) inférieure à 2000 g/mol.

5. Composition de caoutchouc selon l'une quelconque des revendications précédentes, dans laquelle le taux d'élastomère diénique vinylaromatique est compris dans un domaine allant de 85 à 100 pce.

6. Composition de caoutchouc selon l'une quelconque des revendications précédentes, dans laquelle la résine thermoplastique à base de motifs polyphénylène éther éventuellement substitués présente une température de transition vitreuse (Tg), mesurée par DSC selon la norme ASTM D3418 de 1999, comprise dans un domaine allant de 0 à 215°C.

7. Composition de caoutchouc selon l'une quelconque des revendications précédentes, dans laquelle la résine thermoplastique à base de motifs polyphénylène éther éventuellement substitués est un composé comprenant majoritairement des motifs polyphénylène de formule générale (I) : 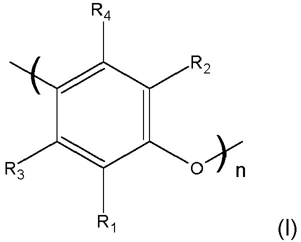 dans laquelle :
- R1, R2, R3 et R4 représentent indépendamment les uns des autres des groupements identiques ou différents choisis parmi les groupements hydrogène, hydroxy, alkoxy, halogène, amino, alkylamino, dialkylamino ou les groupements hydrocarbonés comportant au moins 2 atomes de carbone, éventuellement interrompus par des hétéroatomes et éventuellement substitués ; R1 et R3 d'une part et R2 et R4 d'autre part pouvant former ensemble avec les atomes de carbones auxquels ils se rattachent un ou plusieurs cycles accolés au cycle benzénique du composé de formule (I)
- n est un entier compris dans un domaine allant de 3 à 300.

8. Composition de caoutchouc selon la revendication 7, dans laquelle la résine thermoplastique à base de motifs polyphénylène éther éventuellement substitués est un composé comprenant majoritairement des motifs polyphénylène de formule générale (I) dans laquelle R1, R2, R3 et R4 représentent indépendamment les uns des autres des groupements identiques ou différents choisis parmi :
- l'hydrogène,
- les groupements hydroxy, alkoxy, halogène, amino, alkylamino, dialkylamino,
- les groupements alkyles linéaire, ramifiés ou cycliques, comprenant de 1 à 25 atomes de carbone (de préférence de 2 à 18), éventuellement interrompus par des hétéroatomes choisis parmi l'azote, l'oxygène et le soufre, et éventuellement substitués par des groupements hydroxy, alkoxy, amino, alkylamino, dialkylamino, ou halogène.
- les groupements aryles comprenant de 6 à 18 atomes de carbones (de préférence de 6 à 12), éventuellement substitués par des groupements hydroxy, alkoxy, amino, alkylamino, dialkylamino, alkyle, ou halogène,

9. Composition de caoutchouc selon l'une quelconque des revendications 7 ou 8, dans laquelle R1 et R2 représentent un groupement alkyle et en particulier un groupe méthyle ; et R3 et R4 représentent des atomes d'hydrogène.

10. Composition de caoutchouc selon l'une quelconque des revendications 7 à 9, dans laquelle la résine thermoplastique à base de motifs polyphénylène éther éventuellement substitués est un composé comprenant majoritairement des motifs polyphénylène de formule générale (I) dans laquelle n est un entier compris dans un domaine allant de 3 à 50, de préférence de 5 à 30.

11. Composition de caoutchouc selon l'une quelconque des revendications 7 à 10, dans laquelle la résine thermoplastique à base de motifs polyphénylène éther éventuellement substitués est un composé comprenant à plus de 80% en poids, des motifs polyphénylène de formule générale (I).

12. Composition de caoutchouc selon l'une quelconque des revendications précédentes dans laquelle le taux de ladite résine thermoplastique à base de motifs polyphénylène éther éventuellement substitués est compris dans un domaine allant de 1 à 90 pce, de préférence de 2 à 80 pce.

13. Composition de caoutchouc selon l'une quelconque des revendications 1 à 12, dans laquelle la charge renforçante comporte du noir de carbone et/ou de la silice.

14. Article de caoutchouc finis ou semi-finis comportant une composition de caoutchouc selon l'une quelconque des revendications 1 à 13.

15. Pneumatique comportant une composition de caoutchouc selon l'une quelconque des revendications 1 à 14.

## Patentansprüche

1. Kautschukzusammensetzung auf Basis von mindestens einem Dien-Vinylaromat-Elastomer in einem Gehalt im Bereich von 70 bis 100 phe (Gewichtsteile pro hundert Gewichtsteile Elastomer), einem verstärkenden Füllstoff, einem Vernetzungssystem und einem thermoplastischen Harz, das gegebenenfalls substituierte Polyphenylenether-Einheiten umfasst, wobei das Harz eine zahlenmittlere Molmasse (Mn) von weniger als 6000 g/mol, vorzugsweise von weniger als 3500 g/mol, aufweist.

2. Zusammensetzung nach Anspruch 1, wobei das Dien-Vinylaromat-Elastomer einen Vinylaromatengehalt von mehr als 10 %, vorzugsweise zwischen 15 % und 60 %, aufweist.

3. Zusammensetzung nach Anspruch 1, wobei das Dien-Vinylaromat-Elastomer einen Vinylaromatengehalt zwischen 10 % und 30 % aufweist und wobei das Harz eine zahlenmittlere Molmasse (Mn) von weniger als 2200 g/mol aufweist.

4. Zusammensetzung nach Anspruch 3, wobei das Dien-Vinylaromat-Elastomer einen Vinylaromatengehalt zwischen 12 % und 28 % aufweist und wobei das Harz eine zahlenmittlere Molmasse (Mn) von weniger als 2000 g/mol aufweist.

5. Kautschukzusammensetzung nach einem der vorhergehenden Ansprüche, wobei der Gehalt an Dien-Vinylaromat-Elastomer in einem Bereich von 85 bis 100 phe liegt.

6. Kautschukzusammensetzung nach einem der vorhergehenden Ansprüche, wobei das thermoplastische Harz auf Basis von gegebenenfalls substituierten Polyphenylenether-Einheiten eine durch DSC gemäß der ASTM-Norm D3418 von 1999 gemessene Glasübergangstemperatur (Tg) in einem Bereich von 0 bis 215 °C aufweist.

7. Kautschukzusammensetzung nach einem der vorhergehenden Ansprüche, wobei es sich bei dem thermoplastischen Harz auf Basis von gegebenenfalls substituierten Polyphenylenether-Einheiten um eine Verbindung handelt, die hauptsächlich Polyphenylen-Einheiten der allgemeinen Formel (I) umfasst: 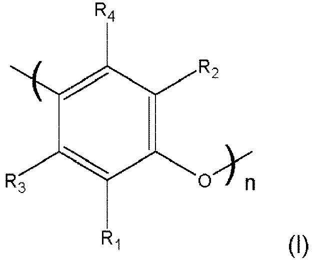 in der:
- R1, R2, R3 und R4 unabhängig voneinander für gleiche oder verschiedene Gruppen stehen, die aus Wasserstoff-, Hydroxy-, Alkoxy-, Halogen-, Amino-, Alkylamino-, Dialkylamino- oder Kohlenwasserstoffgruppen mit mindestens 2 Kohlenstoffatomen, die gegebenenfalls durch Heteroatome unterbrochen und gegebenenfalls substituiert sind, ausgewählt sind; wobei R1 und R3 einerseits und R2 und R4 andererseits zusammen mit den Kohlenstoffatomen, an die sie gebunden sind, einen oder mehrere mit dem Benzolring der Verbindung der Formel (I) anellierte Ringe bilden können,
- n für eine ganze Zahl in einem Bereich von 3 bis 300 steht.

8. Kautschukzusammensetzung nach Anspruch 7, wobei es sich bei dem thermoplastischen Harz auf Basis von gegebenenfalls substituierten Polyphenylenether-Einheiten um eine Verbindung handelt, die hauptsächlich Polyphenylenether-Einheiten der allgemeinen Formel (I) umfasst, in der R1, R2, R3 und R4 unabhängig voneinander für gleiche oder verschiedene Gruppen stehen, die aus
- Wasserstoff,
- Hydroxy-, Alkoxy-, Halogen-, Amino-, Alkylamino- oder Dialkylaminogruppen,
- linearen, verzweigten oder cyclischen Alkylgruppen mit 1 bis 25 Kohlenstoffatomen (vorzugsweise 2 bis 18), die gegebenenfalls durch Heteroatome, die aus Stickstoff, Sauerstoff und Schwefel ausgewählt sind, unterbrochen und gegebenenfalls durch Hydroxy-, Alkoxy-, Amino-, Alkylamino-, Dialkylamino- oder Halogengruppen substituiert sind,
- Arylgruppen mit 6 bis 18 Kohlenstoffatomen (vorzugsweise 6 bis 12), die gegebenenfalls durch Hydroxy-, Alkoxy-, Amino-, Alkylamino-, Dialkylamino-, Alkyl- oder Halogengruppen substituiert sind,
ausgewählt sind.

9. Kautschukzusammensetzung nach einem der Ansprüche 7 oder 8, wobei R1 und R2 für eine Alkylgruppe und insbesondere eine Methylgruppe stehen und R3 und R4 für Wasserstoffatome stehen.

10. Kautschukzusammensetzung nach einem der Ansprüche 7 bis 9, wobei es sich bei dem thermoplastischen Harz auf Basis von gegebenenfalls substituierten Polyphenylenether-Einheiten um eine Verbindung handelt, die hauptsächlich Polyphenylen-Einheiten der allgemeinen Formel (I), in der n für eine ganze Zahl im Bereich von 3 bis 50, vorzugsweise von 5 bis 30, steht, umfasst.

11. Kautschukzusammensetzung nach einem der Ansprüche 7 bis 10, wobei es sich bei dem thermoplastischen Harz auf Basis von gegebenenfalls substituierten Polyphenylenether-Einheiten um eine Verbindung handelt, die mehr als 80 Gew.-% Polyphenylen-Einheiten der allgemeinen Formel (I) umfasst.

12. Kautschukzusammensetzung nach einem der vorhergehenden Ansprüche, wobei der Gehalt des thermoplastischen Harzes auf Basis von gegebenenfalls substituierten Polyphenylenether-Einheiten in einem Bereich von 1 bis 90 phe, vorzugsweise von 2 bis 80 phe, liegt.

13. Kautschukzusammensetzung nach einem der Ansprüche 1 bis 12, wobei der verstärkende Füllstoff Ruß und/oder Kieselsäure umfasst.

14. Kautschuk-Fertigteil oder -Halbzeug, umfassend eine Kautschukzusammensetzung nach einem der Ansprüche 1 bis 13.

15. Reifen, umfassend eine Kautschukzusammensetzung nach einem der Ansprüche 1 bis 14.

## Claims

1. Rubber composition based on at least one predominant vinylaromatic diene elastomer in a content within a range extending from 70 to 100 phr (parts by weight per hundred parts of elastomer), a reinforcing filler, a crosslinking system and a thermoplastic resin comprising optionally substituted polyphenylene ether units, said resin having a number-average molecular weight (Mn) of less than 6000 g/mol, preferably of less than 3500 g/mol.

2. Composition according to Claim 1, in which the vinylaromatic diene elastomer has a vinylaromatic content of greater than 10%, preferably of between 15% and 60.

3. Rubber composition according to Claim 1, in which the vinylaromatic diene elastomer has a vinylaromatic content of between 10% and 30%, and in which said resin has a number-average molecular weight (Mn) of less than 2200 g/mol.

4. Composition according to Claim 3, in which the vinylaromatic diene elastomer has a vinylaromatic content of between 12% and 28%, and in which said resin has a number-average molecular weight (Mn) of less than 2000 g/mol.

5. Rubber composition according to any one of the preceding claims, in which the content of vinylaromatic diene elastomer is within a range extending from 85 to 100 phr.

6. Rubber composition according to any one of the preceding claims, in which the thermoplastic resin based on optionally substituted polyphenylene ether units has a glass transition temperature (Tg), measured by DSC according to standard ASTM D3418, 1999, within a range extending from 0 to 215°C.

7. Rubber composition according to any one of the preceding claims, in which the thermoplastic resin based on optionally substituted polyphenylene ether units is a compound which predominantly comprises polyphenylene units of general formula (I): 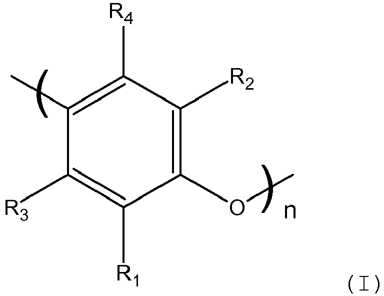 in which:
- R₁, R₂, R₃ and R₄ represent, independently of one another, identical or different groups selected from hydrogen, hydroxyl, alkoxy, halogen, amino, alkylamino or dialkylamino groups or hydrocarbon-based groups comprising at least 2 carbon atoms, optionally interrupted by heteroatoms and optionally substituted; R₁ and R₃ on the one hand, and R₂ and R₄ on the other hand, possibly forming, together with the carbon atoms to which they are attached, one or more rings fused to the benzene ring of the compound of formula (I),
- n is an integer within a range extending from 3 to 300.

8. Rubber composition according to Claim 7, in which the thermoplastic resin based on optionally substituted polyphenylene ether units is a compound predominantly comprising polyphenylene units of general formula (I) in which R₁, R₂, R₃ and R₄ represent, independently of one another, identical or different groups selected from:
- hydrogen,
- hydroxyl, alkoxy, halogen, amino, alkylamino or dialkylamino groups,
- linear, branched or cyclic alkyl groups, comprising from 1 to 25 carbon atoms (preferably from 2 to 18), optionally interrupted by heteroatoms selected from nitrogen, oxygen and sulphur and optionally substituted by hydroxyl, alkoxy, amino, alkylamino, dialkylamino or halogen groups,
- aryl groups comprising from 6 to 18 carbon atoms (preferably from 6 to 12), optionally substituted by hydroxyl, alkoxy, amino, alkylamino, dialkylamino, alkyl or halogen groups.

9. Rubber composition according to either one of Claims 7 and 8, in which R₁ and R₂ represent an alkyl group and in particular a methyl group, and R₃ and R₄ represent hydrogen atoms.

10. Rubber composition according to any one of Claims 7 to 9, in which the thermoplastic resin based on optionally substituted polyphenylene ether units is a compound which predominantly comprises polyphenylene units of general formula (I) in which n is an integer within a range extending from 3 to 50, preferably from 5 to 30.

11. Rubber composition according to any one of Claims 7 to 10, in which the thermoplastic resin based on optionally substituted polyphenylene ether units is a compound which comprises more than 80% by weight of polyphenylene units of general formula (I).

12. Rubber composition according to any one of the preceding claims, in which the content of said thermoplastic resin based on optionally substituted polyphenylene ether units is within a range extending from 1 to 90 phr, preferably from 2 to 80 phr.

13. Rubber composition according to any one of Claims 1 to 12, in which the reinforcing filler comprises carbon black and/or silica.

14. Finished or semi-finished rubber article comprising a rubber composition according to any one of Claims 1 to 13.

15. Tyre comprising a rubber composition according to any one of Claims 1 to 14.
